# EUROPEAN PATENT APPLICATION

(11) **EP 2 466 407 A1**
(43) Date of publication of application: **20.06.2012**
(21) Application number: 10015794.0
(22) Date of filing: 17.12.2010
(51) Int. Cl.: G05B 23/00, H02J 3/38, H04L 29/06

(54) **Monitoring inverters in a photovoltaic system**

(71) Applicant: Solare Datensysteme GmbH, 72351 Geislingen-Binsdorf (DE)
(72) Inventor: Karwath, Jörg, 72336 Balingen (DE)
(74) Representative: Toleti, Martin

(57) **Abstract**

In a method for monitoring multiple inverters (2) in a photovoltaic system via a common serial interface (4) a first data protocol and a first set of interface characteristics is applied for establishing a connection to a first one of the inverters (2) via the common serial interface (4). Data is received from the first inverter in response to establishing the connection. A second data protocol and a second set of interface characteristics is applied for establishing a connection to a second one of the inverters (2) via the common serial interface (4). Data is received from the second inverter in response to establishing the connection. The first data protocol differs from the second data protocol and/or the first set of interface characteristics differs from the second set of interface characteristics.

## Description

### Technical Field

The present invention refers to a method for monitoring multiple inverters in a photovoltaic system, a corresponding computer program element, and a monitoring unit for monitoring multiple inverters in a photovoltaic system.

### Background Art

The exploitation of solar energy becomes more popular as traditional energy resources such as oil or gas are limited in occurrence. Solar energy plants are planned and realized for supplying electrical energy generated by conversion from solar energy into large power grids.

In commercializing the generation and distribution of solar based energy it becomes important to plant operators and owners and likewise to private owners of small scale photovoltaic modules to monitor the amount of electrical energy generated and/or supplied into such power grid. The same holds for the administration since in some countries the supply of solar based energy into power grids is subsidized.

For such purposes, monitoring systems are provided which serve for monitoring the generation and/or supply of solar based energy. Monitoring a photovoltaic system also is important from a technical view for detecting failures in the photovoltaic modules and/or in inverters linked to such photovoltaic modules. Exemplary monitoring systems are described on the webpage of the applicant on http://www.solar-log.com/, accessed on November 18, 2010.

Since there are many different market participants in building photovoltaic modules and associated inverters needed for converting the DC provided by a photovoltaic module into AC required by the power grid, photovoltaic systems may be built from modules and inverters of different manufactures exhibiting different communication interfaces. In such scenario, a monitoring unit needs to provide several physically separated interfaces including corresponding plug-in connectors in order enable the monitoring unit to communicate with all the inverters.

### Disclosure of the Invention

The problem to be solved by the present invention is therefore to provide an efficient way for monitoring multiple inverters in a photovoltaic system even if such inverters are not compatible amongst each other in terms of communication.

This problem is solved by a method for monitoring multiple inverters in a photovoltaic system. In such method, preferably a monitoring unit which is linked to the inverters via a common serial interface applies a first data protocol and a first set of interface characteristics for establishing a connection to a first one of the inverters via the common serial interface. Once such connection is established with the first inverter, data may be received from the first inverter in response to having the connection established which may include but is not limited to the data being requested by the monitoring unit, the data being sent on initiative of the first inverter, or the data being immediately sent upon the connection being established.

In order to allow communication with a second one of the inverters, a second data protocol and a second set of interface characteristics is applied for establishing a connection to the second inverter via the common serial interface.

Once such connection is established with the second inverter, data may be received from the second inverter in response to having the connection established which may include but not is limited to the data being requested by the monitoring unit, the data being sent on the initiative of the second inverter, or the data being immediately sent upon the connection being established.

It is understood, that the various inverters are linked to the monitoring unit, preferably, by wire, by means of a common serial interface. In the present context, the term "linked" is used whenever it is referred to the physical qualification that the linked inverter can communicate with the monitoring unit. In a wire link, this may imply that the respective sender and receiver are cabled. In a wireless link, this may imply that the respective sender and receiver are sensitive to a common frequency, for example.

In contrast, a connection is established when the sender and the receiver are enabled to send and/or receive data to/from each other and understand such data, i.e. to communicate with each other. This may imply applying settings in form of parameters or protocols between the sender and the receiver. For doing so, sender and receiver may in an initial phase exchange datagrams, e.g. in form of handshakes, for establishing such connection.

In the above scenario, the first data protocol may differ from the second data protocol and/or the first set of interface characteristics may differ from the second set of interface characteristics. This includes that in a first alternative, only the data protocols for connecting and communicating with the first and the second inverter differ. In another alternative, only the sets of interface characteristics for connecting and communicating with the first and the second inverter differ. In another alternative, both, the data protocols and the sets of interface characteristics for connecting and communicating with the first and the second inverter differ.

For the reason that a data protocol in a communication system may define message formats and rules for exchanging those messages, the data protocols for addressing the first and the second inverters may differ in at least one of the format and the rules.

A set of interface characteristics may preferably include electrical characteristics such as a baud rate or other communication parameters. For the interface characteristics being different for addressing the first and the second inverter, it is sufficient that at least one of the parameters differs in value. As an example, in order to communicate to the first inverter a first baud rate needs to be applied by the monitoring unit, and in order to communicate to the second inverter a second baud rate needs to be applied by the monitoring unit which second baud rate is different in value from the first baud rate.

As a result, the monitoring unit, and preferably a driver of the monitoring unit being responsible for communicating to the inverters preferably has access to the individual data protocols and interface characteristics assigned to each of the inverters such that this information can be applied when needed.

Of course, the invention is not limited to two inverters being linked to the monitoring unit. Many more inverters using different data protocols and/or interface characteristics may be linked to the monitoring unit, and a communication can be established to those via the common serial interface in an analogous way.

The common serial interface preferably is an interface according to the EIA 485 standard (Electronic Industries Alliance), previously known as RS485. Such interface is embodied as a differential, serial interface wherein non-zero potentials are applied to both wires a difference of which represents a symbol. The characteristic of a serial interface implies that bits representing a codeword are transmitted sequentially.

A common serial interface implies that all inverters make use of a common interface, e.g. in form of a common pair of wires, in order to communicate with the monitoring unit. There are no individual physical interfaces provided between each of the inverters and the monitoring unit.

The inverters typically convert a DC signal, i.e. a direct current signal, provided by an associated photovoltaic module into an AC signal, i.e. an alternate current signal, as required by power grids. An inverter of a preferred embodiment not only provides a power interface for supplying an AC power signal, but also a low energy communication interface. Via such low energy communication interface, various data can be transmitted from the inverter to the monitoring unit and possibly reverse, such as one or more of a string message, an indication of a failure of the inverter, a performance value of the inverter and status information with respect to the inverter.

The present invention provides an efficient monitoring system which avoids the provisioning with an individual link between each inverter and the monitoring unit if such inverters make use of different data protocols and/or different interface characteristics. Instead, a common serial link may be used which serves for communicating to all inverters. It is easy to upgrade existing systems to such solution for the reason that a core functionality of the present method may reside in a software driver for the common serial interface such that a software update may be sufficient to upgrade existing monitoring units. Loads of cabling can be avoided. As a result, users are flexible in building photovoltaic systems by using components of different manufacturers, and/or components with different interface characteristics and/or data protocols.

According to another aspect of the present invention, there is provided a computer program element comprising computer program code means for implementing a method according to any one of the above and below embodiments when being executed on a processing unit.

According to a further aspect of the present invention, a monitoring unit is provided for monitoring multiple inverters in a photovoltaic system. The monitoring unit is capable of addressing a serial interface which shall provide a common link to the inverters. A device driver of the monitoring unit for operating the common serial interface is adapted to apply a first data protocol and a first set of interface characteristics for establishing a connection to a first one of the inverters. The device driver further is adapted to apply a second data protocol and a second set of interface characteristics for establishing a connection to a second one of the inverters. The first data protocol differs from the second data protocol and/or the first set of interface characteristics differs from the second set of interface characteristics.

Other advantageous embodiments are listed in the dependent claims as well as in the description below.

The described embodiments similarly pertain to the method, the computer program element and the apparatus. Synergetic effects may arise from different combinations of the embodiments although they might not be described in detail.

Further on it shall be noted that all embodiments of the present invention concerning a method might be carried out in the order of the steps as described or in any other order. The disclosure and scope of the invention shall include any order of steps irrespective of the order listed in the claims.

### Brief Description of the Drawings

The aspects defined above and further aspects, features and advantages of the present invention can also be derived from the examples of embodiments to be described hereinafter and are explained with reference to the following drawings. In the drawings,
Figure 1 shows a block diagram of a photovoltaic system according to an embodiment of the present invention,
Figure 2 shows a block diagram of a photovoltaic system according to another embodiment of the present invention,
Figure 3 shows a flow chart of a method for monitoring multiple inverters in a photovoltaic system according to an embodiment of the present invention, and
Figure 4 shows a table listing communication protocols and other communication parameters assigned to individual inverters as used in an embodiment of the present invention.

### Modes for Carrying Out the Invention

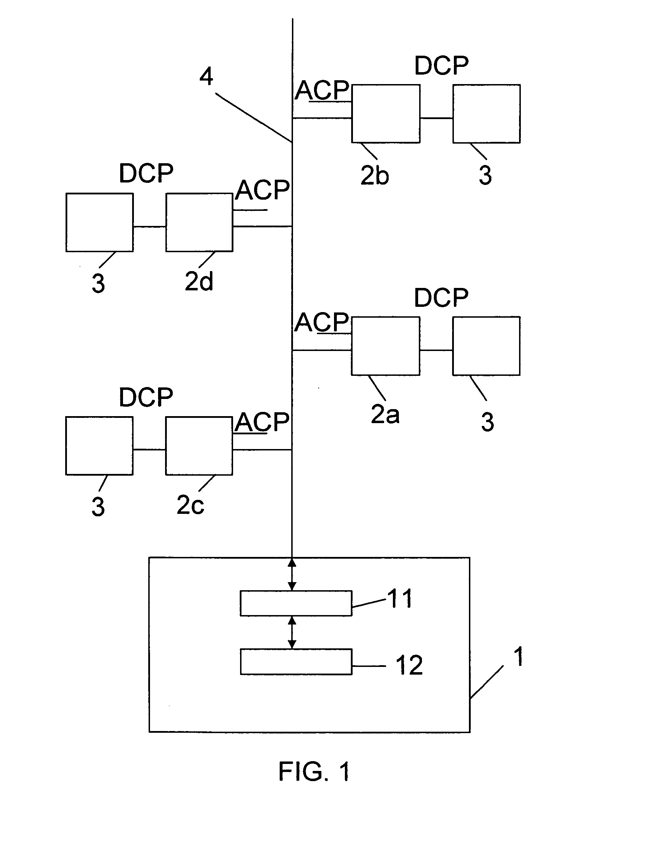

Figure 1 shows a block diagram of a photovoltaic system according to an embodiment of the present invention. A monitoring unit 1 is linked via a serial interface 4 to an exemplary number of four combinations of a photovoltaic module 3 and a corresponding inverter 2a, 2b, 2c, 2d, collectively denoted as inverters 2. Each inverter 2 is linked to the assigned photovoltaic module 3 for receiving a direct current power signal DCP representing the solar energy captured and converted into an electrical power signal, typically of direct current characteristic. Each inverter 2 inverts the direct current power signal DCP into an alternate current signal ACP which may be supplied into a power grid not shown. The link between each of the inverters 2 and the monitoring unit 1 instead represents a communication link transmitting information rather than power. For such reason, each of the inverters 2 is linked to the monitoring unit 1 through a common interface represented by a common line in Figure 1.

The monitoring unit 1 preferably is adapted to communicate to inverters 2 of different manufactures although such inverters 2 may not be approached all by the same data protocol or the same interface characteristics which interface characteristics are also denoted as communication parameters in the following. A combination of multiple interface characteristic is also referred to as a set of interface characteristics. For two sets of interface characteristics being different from each other it is sufficient that at least one of the communication parameters included in such sets is different in value.

For such reason, the monitoring unit 1 provides a driver 11 as schematically depicted in Figure 1 which driver 11 allows communicating to all the inverters 2 connected through the common serial interface 4.

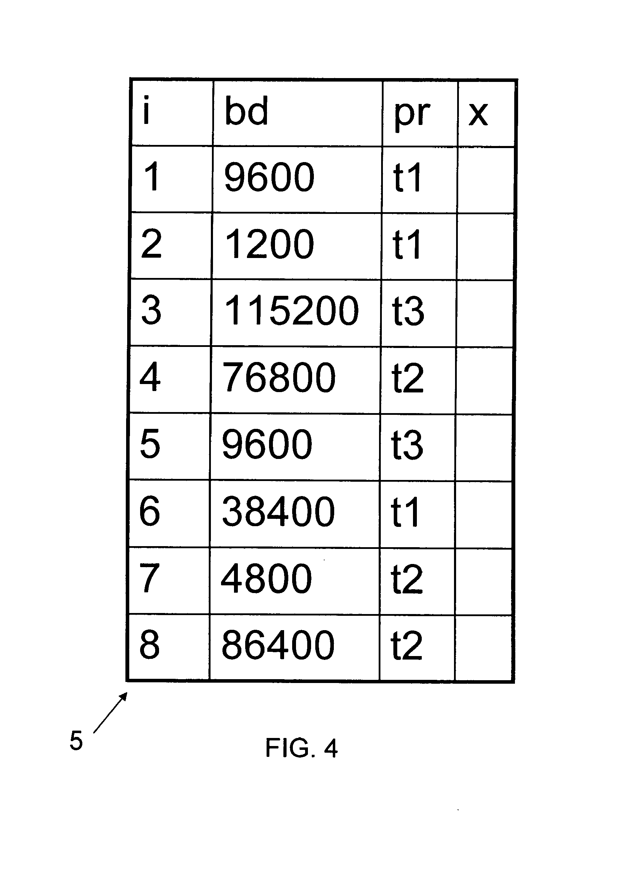

For an operation of the driver 11 the data protocols and communication parameters for all the inverters connected, or, in another embodiment, for all inverters supported by the monitoring unit 1 are maintained / stored in the monitoring unit 1 and are assigned to the individual inverters 2 linked. Such mapping in form of a table may exemplary be illustrated in Figure 4, in which i denotes an identifier for the inverters linked with the monitoring unit. Currently, there are eight inverters i=[1....8] linked to the monitoring unit, however, such number only represents an exemplary number in a sample monitoring system. The subsequent column denotes a baud rate "bd" in Baud the respective inverter i operates with. The column "pr" indicates the type "t" of protocol to be used in order to communicate with the assigned inverter. In a preferred embodiment, a range of baud rates to be applied may be between 1200 Bd and 115200 Bd.

In a data protocol a number of parity bits to be used, a number of start bits, and/or a number of stop bits may be specified amongst others. One or more of such parameters of a data protocol may, for example, differ in the data protocols used by the various inverters. The column "x" collectively represents any other communication parameter that may be adjustable by the monitoring unit for communicating to the inverters.

In the present table of Figure 4, each individual communication parameter is listed and assigned to the respective inverter i. Such information may be entered into the table when configuring the monitoring unit. In another embodiment, the communication parameters of different types of inverters available are stored, for example, in a ROM of the monitoring unit. The monitoring unit may probe all the combinations of data protocols and communication parameters and wait for a response in order to identify which sort of inverters are linked to the common serial interface. Such inverters may then be recorded as being linked to the monitoring unit.

For the embodiment of Figure 1, it is assumed that the monitoring unit 1 already is in possession of a table such as illustrated in Figure 4 and as such is aware of the communication parameters to be used to communicate to each of the connected inverters 2a, 2b, 2c and 2d. The communication in the present photovoltaic system advantageously is implemented as kind of a master / slave concept in which the monitoring unit 1 represents the master controlling a beginning and termination of any connection and communication to the individual inverters 2.

In this context, it is preferred that the driver 11 of the monitoring unit 1 selects a first one of the inverters, for example, inverter 2a, and establishes a communication with this inverter 2a. For such purpose, the driver 11 identifies the protocol "pr" and any other communication parameters assigned to the inverter 2a from the table of Figure 4, and starts initializing a connection to the inverter 2a. For doing so, the monitoring unit 1 makes use of the extracted protocol and the associated communication parameters for addressing the inverter 2a. In particular, such initialization may include a request by the driver 11 and an acknowledgement by the inverter 2a, and possible any further steps. Given that, for example, the inverter 2a is represented by device identifier i=5 in the table of Figure 4, the monitoring unit selects a baud rate "bd" of 9600 Baud, and a protocol "pr" of type t3.

Once such communication to the first inverter, i.e. the inverter 2a, is established, the inverter 2a may either send data on its own initiative, or may be asked by the monitoring unit 1 to transmit specific data. When receiving such data by the monitoring unit 1, the driver 11 may verify that the data origins from the inverter 2a to which the current communication is established by verifying the identifier of the sender. Any data not stemming from the currently established communication with inverter 2a may be discarded and/or ignored.

Data transmitted from the inverters may generally refer to one or more of status information with respect to the inverter and/or a performance value of the inverter, i.e. data indicating the electrical energy the inverter has supplied. As a specific example of status information the inverter may indicate a failure of the inverter. However, subject to the protocol used, the inverter may also be enabled to transmit strings which the monitoring unit may display to an operator of the monitoring unit.

In the above context, the common serial interface may be operated in a half duplex way such that it is either the monitoring unit or the inverter transmitting data at a time. The other unit may wait for the sender having stopped the transmission of data until it can send data itself. Or, the common serial interface may be operated in a full duplex mode such that the monitoring unit and the connected inverter can transmit data at the same time.

Once the exchange of data between the monitoring unit 1 and the first inverter 2a shall be terminated, the connection may be terminated according to the protocol used. Thereafter, the monitoring unit 1 may select a different inverter as second inverter to connect to, such as inverter 2b in Figure 1, which inverter 2b may be identified as inverter i=2 in the table of Figure 4. The monitoring unit 1 may select the associated interface parameters which are baud rate "bd" of 1200 Baud and communication protocol "pr" of type t1. The monitoring unit 1 may establish a communication with this second inverter 2b. Once such communication is established, data may be exchanged between the monitoring unit 1 and the second inverter 2b, and specifically, the second inverter 2b may send power output data and inverter status information to the monitoring unit 1 on demand. Subject to any trigger, the communication and the connection with the inverter 2b may be terminated.

Such process may sequentially be applied to all remaining inverters 2c, 2d, ... connected to the common serial interface 4. Once the monitoring unit 1 receives data from the last inverter, the connection set-up and a new data exchange may start with the first inverter 2a again.

There may be fixed intervals at which inverters 2 are addressed, or, the next inverter may be addressed once the connection to the previous inverter is terminated. The polling order of inverters 2 may be determined up-front, or may be determined on the fly. There may be interrupt means which allows an inverter 2 to be served in a prioritized way.

The data received in the monitoring unit 1 is evaluated by an evaluator 12 as shown in Figure 1. The evaluator 12 may be responsible for e.g. comparing the power output of an inverter to thresholds and providing an alarm signal once the a power output may fall below such threshold although other indicators such as weather forecast data or environmental sensors indicate that there should be sufficient solar radiation for a better yield in power. The evaluator 12 may be responsible for displaying relevant data possibly including the power output and/or status information of the inverters 2, and or may even initiate control steps, e.g. disconnecting a failing inverter from the power grid.

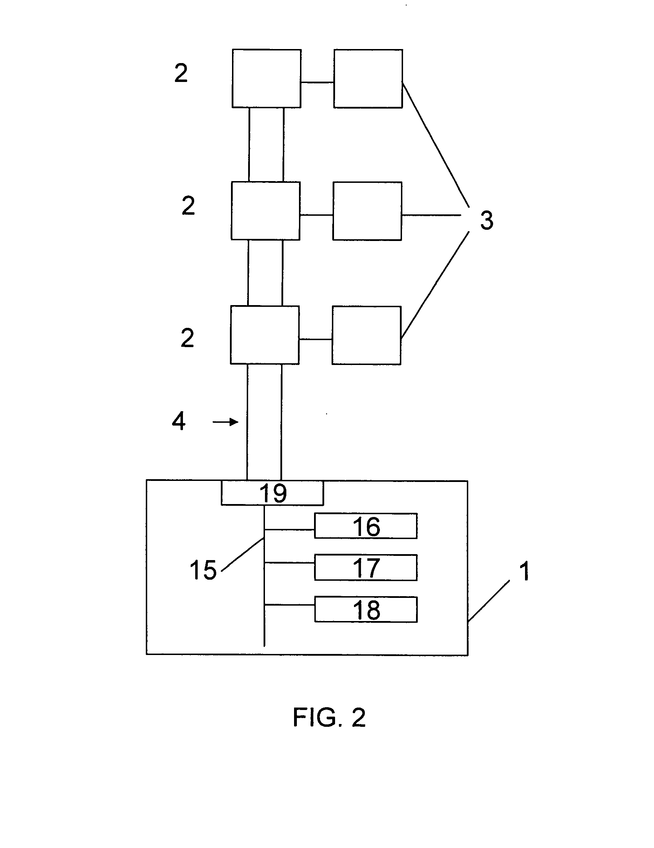

Figure 2 shows a block diagram of a photovoltaic system according to another embodiment of the present invention. This embodiment differs from the embodiment of Figure 1 in that the inverters 2 are connected to the two wire common serial interface 4 in a daisy chain concept in which a subsequent inverter is connected to the previous inverter, and only the first inverter is directly connected to the monitoring unit 1.

The monitoring unit 1 is illustrated in a more hardware oriented manner in that reference 19 denotes the hardware interface including an associated plug, while reference 16 denotes a ROM, reference 17 denotes a RAM, and reference 18 denotes a processing unit. All these elements are connected to each other via an internal bus system 15. In the present context, any evaluation routine may be stored as software in the ROM 16 and be transferred to the RAM 17 for execution through the processing unit 18. The ROM 16 may include a table as shown in Figure 4 for supporting the communication to the individual inverters 2.

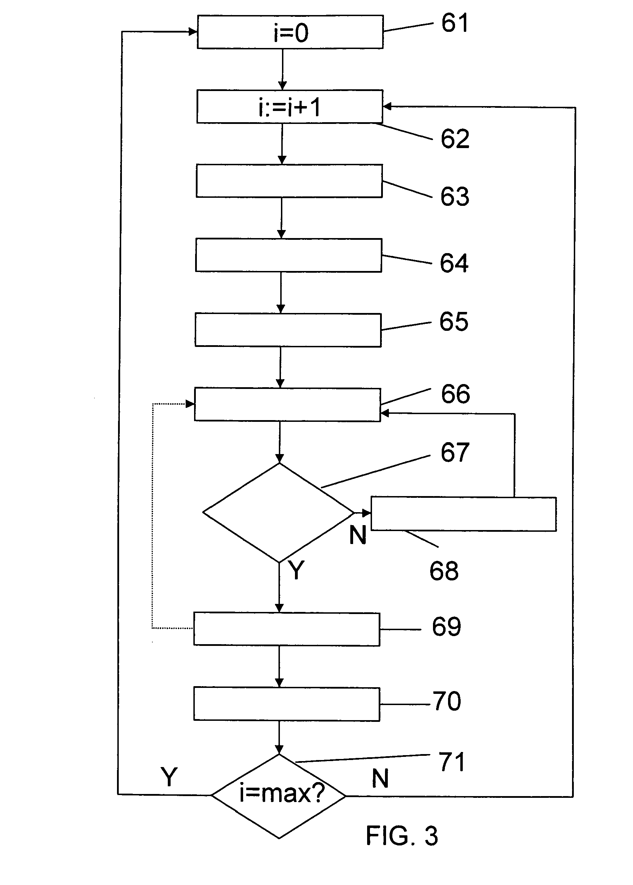

Figure 3 shows a flow chart of a method for monitoring multiple inverters in a photovoltaic system according to an embodiment of the present invention. Preferably, the steps in the flow chart are performed by the monitoring unit connected by a common serial interface to the multiple inverters in a photovoltaic system. In step 61 the routine for communicating with the different inverters is initiated. Inverter identifier i is set to zero. In the next step 62, the inverter identifier i is increased by one indicating that a communication with the first inverter i=1 shall be established. In subsequent step 63, the monitoring unit selects a data protocol and interface parameters enabling to communicate to inverter i=1. In step 64, the monitoring unit issues a connect request using the identified data protocol and the identified interface parameters, and in step 65, the monitoring unit receives an acknowledgement to the connect request such that a connection is established.

In step 66, the monitoring unit receives data in the agreed protocol format. In step 67, the monitoring unit verifies if the received data origins from the inverter i=1. If not (N), the monitoring unit ignores the received data in step 68 and returns to step 66 waiting for new data to arrive. If the received data is identified to stem from the inverter i=1 (Y), such data is evaluated in step 69, or, respectively is transferred to an evaluation unit. Optionally as indicated in a dotted line, the monitoring unit may continue to wait for more data to come in step 66. However, in case it is assumed that the monitoring unit has received all data required it may continue to terminate the connection with inverter i=1 in step 70. In step 71, the monitoring unit may verify if the disconnected inverter is the last (max) inverter in a row of inverters to be monitored. If the disconnected inverter is not the last inverter in a row of inverters to be monitored (N), then the process continues in step 62, and the next inverter i=2 is selected for connecting and communicating to, including selecting the associated data protocol and the associated interface parameters in step 63.

If the disconnected inverter is the last (max) inverter in a row of inverters to be monitored (Y), the process may return to step 61, the counter i may be reset, and in step 62 the first inverter i=1 may be selected again for connecting to. Between step 71 and step 61 a delay element may be provided, in case a quasi continuous monitoring of the inverters is not required.

## Claims

1. Method for monitoring multiple inverters (2) in a photovoltaic system via a common serial interface (4) comprising the steps of
applying a first data protocol and a first set of interface characteristics for establishing a connection to a first one of the inverters (2) via the common serial interface (4),
receiving data from the first inverter in response to establishing the connection,
applying a second data protocol and a second set of interface characteristics for establishing a connection to a second one of the inverters (2) via the common serial interface (4),
receiving data from the second inverter in response to establishing the connection,
wherein the first data protocol differs from the second data protocol and/or the first set of interface characteristics differs from the second set of interface characteristics.

2. Method according to claim 1, wherein the first set of interface characteristics includes a transmission baud rate different from a transmission baud rate of the second set of interface characteristics.

3. Method according to claim 1 or claim 2,
wherein the first data protocol includes a number of parity bits different to a number of parity bits used in the second data protocol.

4. Method according to any one of the preceding claims, wherein the first data protocol includes a number of start and/or stop bits different to a number of start and/or stop bits used in the second data protocol.

5. Method according to any one of the preceding claims, wherein the common serial interface (4) is operated in one of a half duplex mode and a full duplex mode.

6. Method according to any one of the preceding claims, wherein the common serial interface (4) is operated according to the EIA-485 standard.

7. Method according to any one of the preceding claims, comprising identifying a sender of the data received and accepting the data when the sender is identified as inverter (2) to which a connection currently is established.

8. Method according to claim 7, wherein the data is discarded if the sender is not identified as inverter (2) to which a connection currently is established.

9. Method according to any one of the preceding claims, wherein the data received refers to at least one of the following:
- a string message;
- an indication of a failure of the inverter;
- a performance value of the inverter;
- status information with respect to the inverter.

10. Computer program element comprising computer program code means for implementing a method according to any one of the preceding claims when being executed on a processing unit.

11. Monitoring unit for monitoring multiple inverters in a photovoltaic system, comprising
a common serial interface (4) for linking the inverters (2) to the monitoring unit (1), and
a device driver (11) for operating the common serial interface (4), the device driver (11) being adapted to applying a first data protocol and a first set of interface characteristics for establishing a connection to a first one of the inverters (2), and being adapted to applying a second data protocol and a second set of interface characteristics for establishing a connection to a second one of the inverters (2), wherein the first data protocol differs from the second data protocol and/or the first set of interface characteristics differs from the second set of interface characteristics.

12. Monitoring unit according to claim 11, comprising an evaluator (12) for evaluating data received from the inverters (2).

13. Photovoltaic system, comprising multiple photovoltaic modules (3),
multiple inverters (2), each inverter (2) being linked to at least one of the photovoltaic modules (3) for converting a direct current signal (DCP) provided by the associated photovoltaic module (3) into an alternating current signal (ACP), and
a monitoring unit (1) according to claim 11 or claim 12 being linked to the inverters (2) by a common serial interface (4).

14. Photovoltaic system according to claim 13, wherein the inverters (2) are linked in a daisy chain to the common serial interface (4).

## Amended claims

### Amended claims in accordance with Rule 137(2) EPC.

**1.** Method for monitoring multiple inverters (2) in a photovoltaic system via a common serial interface (4), with a monitoring unit
applying a first data protocol and a first set of interface characteristics for establishing a connection to a first one of the inverters (2) via the common serial interface (4),
receiving data from the first inverter in response to establishing the connection,
applying a second data protocol and a second set of interface characteristics for establishing a connection to a second one of the inverters (2) via the common serial interface (4),
receiving data from the second inverter in response to establishing the connection,
wherein the first data protocol differs from the second data protocol and/or the first set of interface characteristics differs from the second set of interface characteristics.

**2.** Method according to claim 1, wherein the first set of interface characteristics includes a transmission baud rate different from a transmission baud rate of the second set of interface characteristics.

**3.** Method according to claim 1 or claim 2, wherein the first data protocol includes a number of parity bits different to a number of parity bits used in the second data protocol.

**4.** Method according to any one of the preceding claims, wherein the first data protocol includes a number of start and/or stop bits different to a number of start and/or stop bits used in the second data protocol.

**5.** Method according to any one of the preceding claims, wherein the common serial interface (4) is operated in a full duplex mode.

**6.** Method according to any one of the preceding claims, wherein the common serial interface (4) is operated according to the EIA-485 standard.

**7.** Method according to any one of the preceding claims, comprising identifying a sender of the data received and accepting the data when the sender is identified as inverter (2) to which a connection currently is established.

**8.** Method according to claim 7, wherein the data is discarded if the sender is not identified as inverter (2) to which a connection currently is established.

**9.** Method according to any one of the preceding claims, wherein the data received refers to at least one of the following:
- a string message;
- an indication of a failure of the inverter;
- a performance value of the inverter;
- status information with respect to the inverter.

**10.** Computer program element comprising computer program code means for implementing a method according to any one of the preceding claims when being executed on a processing unit.

**11.** Monitoring unit for monitoring multiple inverters in a photovoltaic system, comprising
a common serial interface (4) for linking the inverters (2) to the monitoring unit (1), and
a device driver (11) for operating the common serial interface (4), the device driver (11) being adapted to applying a first data protocol and a first set of interface characteristics for establishing a connection to a first one of the inverters (2), and being adapted to applying a second data protocol and a second set of interface characteristics for establishing a connection to a second one of the inverters (2), wherein the first data protocol differs from the second data protocol and/or the first set of interface characteristics differs from the second set of interface characteristics.

**12.** Monitoring unit according to claim 11, comprising an evaluator (12) for evaluating data received from the inverters (2).

**13.** Photovoltaic system, comprising
multiple photovoltaic modules (3),
multiple inverters (2), each inverter (2) being linked to at least one of the photovoltaic modules (3) for converting a direct current signal (DCP) provided by the associated photovoltaic module (3) into an alternating current signal (ACP), and
a monitoring unit (1) according to claim 11 or claim 12 being linked to the inverters (2) by a common serial interface (4).

**14.** Photovoltaic.system according to claim 13, wherein the inverters (2) are linked in a daisy chain to the common serial interface (4).
